# EUROPEAN PATENT APPLICATION

(11) **EP 4 755 565 A1**
(43) Date of publication of application: **10.06.2026**
(21) Application number: 24848897.5
(22) Date of filing: 16.07.2024
(51) Int. Cl.: B23K 9/12, B21F 1/02

(54) **WELDING WIRE CORRECTION DEVICE**

(30) Priority: 02.08.2023 JP 2023126574
(71) Applicant: Panasonic Intellectual Property Management Co., Ltd., Kadoma-shi, Osaka 571-0057 (JP)
(72) Inventor: FUKUMITSU, Yoichi, Kadoma-shi, Osaka 571-0057 (JP)
(74) Representative: Novagraaf International SA
(86) International application number: PCT/JP2024/025503
(87) International publication number: WO 2025/028241

(57) **Abstract**

Welding wire correction device (11) straightens bending of welding wire (1) by passing welding wire (1) between a plurality of correction rollers (63, 65). The plurality of correction rollers (63, 65) are arranged at a predetermined interval in a passing direction of welding wire (1) and face each other with passage (55) interposed between correction rollers (63, 65). The passage is a passage through which the welding wire (1) passes. The predetermined interval is adjustable by using at least one plate member (69).

## Description

### TECHNICAL FIELD

The present disclosure relates to a welding wire correction device.

### BACKGROUND ART

PTL 1 discloses a welding wire correction device that includes a plurality of correction rollers disposed on an upstream side and a downstream side in a direction in which a welding wire is fed, and another correction roller disposed between the plurality of correction rollers and at a position facing the plurality of correction rollers, and corrects the welding wire by passing the welding wire between the plurality of correction rollers. In the welding wire correction device, at least one of the correction rollers is rotatably supported by a correction roller attachment seat, and the one correction roller can be displaced in a direction of approaching or separating from the welding wire fed between the correction rollers through the correction roller attachment seat. Further, a correction roller moving mechanism for displacing the one correction roller in a direction of approaching or separating from the welding wire through the correction roller attachment seat is detachably locked to a frame on the fixed side such that the one correction roller is displaced in a direction of separating from the welding wire when the correction roller moving mechanism is detached from the frame on the fixed side.

PTL 2 discloses a welding wire correction device that includes two roll groups each including a plurality of correction rolls, and corrects bending of a welding wire by passing the welding wire between the two roll groups. In the welding wire correction device, the plurality of correction rolls constituting each of the roll groups are arranged at a predetermined arrangement interval in a passing direction of the welding wire so as to face each other with a correction passage, through which the welding wire passes, interposed therebetween, the two roll groups are arranged differently from each other in a facing direction with the correction passage therebetween, and the correction rolls are constituted by small-diameter rolls.

### Citation List

### Patent Literature

PTL 1: Unexamined Japanese Patent Publication No. 2011-194419
PTL 2: Unexamined Japanese Patent Publication No. 2015-123489

### SUMMARY OF THE INVENTION

An object of the present disclosure is to provide a welding wire correction device capable of more easily adjusting an interval between correction rollers.

The present disclosure provides a welding wire correction device that straightens bending of a welding wire by passing the welding wire between a plurality of correction rollers, wherein the plurality of correction rollers are arranged at a predetermined interval in a passing direction of the welding wire and face each other with a passage interposed between the correction rollers, the passage being a passage through which the welding wire passes, and the predetermined interval is adjustable by using at least one plate member.

According to the present disclosure, the interval between the correction rollers can be more easily adjusted.

### BRIEF DESCRIPTION OF THE DRAWINGS

Fig. 1 is a side view illustrating an appearance of a welding robot including a welding wire correction device according to the present exemplary embodiment.
Fig. 2 is an enlarged perspective view of a main part in the vicinity of the welding wire correction device.
Fig. 3 is a perspective view of the welding wire correction device.
Fig. 4 is a side view of the welding wire correction device.
Fig. 5 is a cross-sectional view taken along line A-A of Fig. 4.
Fig. 6 is an exploded perspective view of the main part in a state where an upper support part and a lower support part are separated from each other.
Fig. 7 is an enlarged side view of the main part of the welding wire correction device when one side surface illustrated in Fig. 6 is viewed from the front.
Fig. 8 is a transparent perspective view of the support part.

### DESCRIPTION OF EMBODIMENT

### (Background of present disclosure)

In supplying a welding wire to a torch, it is preferable that a welding wire correction device correct the bending tendency of the welding wire in order to prevent a positional deviation of the welding wire fed toward a welding position and to stabilize contact between a power supply chip at the tip of the torch and the welding wire.

Conventionally, there has been a welding wire correction device that is capable of correcting a welding wire to a desired bending tendency, even a welding wire formed of a different material or a welding wire having a different diameter, by adjusting an interval between correction rollers with a screw or the like to plastically deform the welding wire (see PTL 1). As a method of correcting the bending tendency of the welding wire using the welding wire correction device, there is a method of adjusting the interval between the correction rollers with reference to the scale on the adjustment screw in a state where the welding wire is removed for replacement of the welding wire.

However, since an operator manually performs the adjustment of the interval between the correction rollers with the adjustment screw while visually checking the scale, fine adjustment of 0.1 mm or less is difficult, and there is a problem that the interval between the correction rollers varies. The adjustment of the interval between the correction rollers with the adjustment screw depends on the positional accuracy of the scale. Therefore, when the positional accuracy of the scale is low for each welding wire correction device, the proper value of the scale varies for each welding wire correction device, and thus there is a problem that the interval between the correction rollers varies even when the interval between the correction rollers is adjusted under the same condition.

In addition, there is a welding wire correction device which does not include a mechanism for adjusting an interval between correction rollers (see PTL 2). In such a welding wire correction device, there is no variation in the bending tendency of a welding wire due to an adjustment error by operator's manual work, and there is no change in an interval between correction rollers due to loosening of an adjustment screw, which has occurred in the conventional welding wire correction device, so that the welding wire can stably have a constant bending tendency. However, in the welding wire correction device, when the material of the welding wire, the wire diameter of the welding wire, or the desired bending tendency of the welding wire is changed, the interval between the correction rollers is changed for obtaining the desired bending tendency. Therefore, a welding wire correction device is required to be manufactured for each material of a welding wire, each wire diameter of the welding wire, or each desired bending tendency of the welding wire, and there is a problem that the number of management steps increases.

Hereinafter, an exemplary embodiment in which a configuration and an operation of a welding wire correction device according to the present disclosure are specifically disclosed will be described in detail with reference to the drawings as appropriate. It is noted that an unnecessary detailed description may be omitted. For example, a detailed description of already well-known matters and a duplicate description of substantially same configurations may be omitted. This is to avoid unnecessary redundancy of the following description and to facilitate understanding of those skilled in the art. Note that the appended drawings and the following descriptions are provided for those skilled in the art to fully understand the present disclosure, and are not intended to limit the subject matter set forth in the claims.

In the following description of welding wire correction device 11, a direction in which welding wire 15 of welding wire correction device 11 passes is defined as a horizontal direction, and a direction substantially orthogonal to the direction in which welding wire 15 passes is defined as a height direction or a vertical direction.

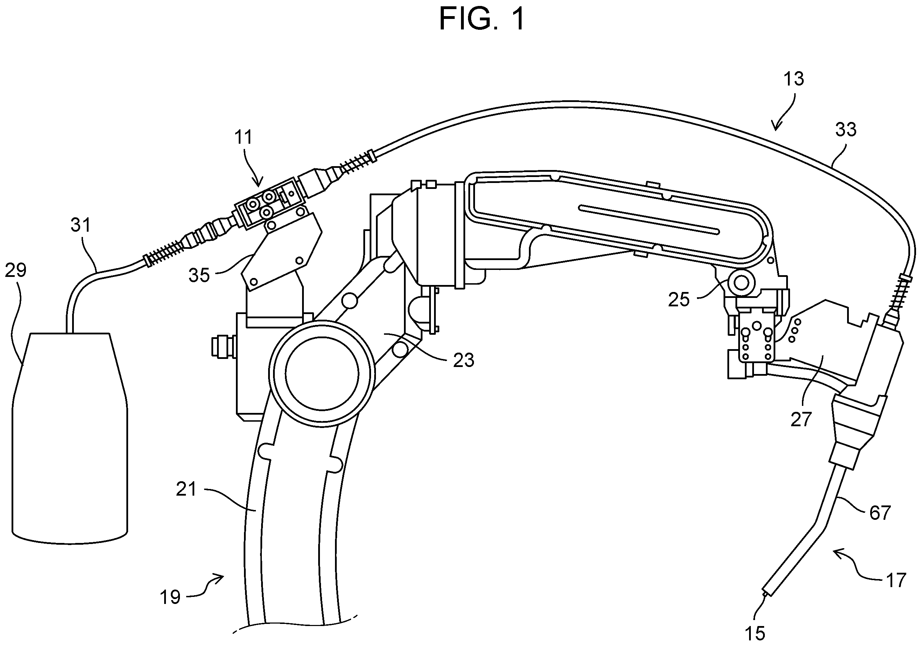

First, an outline of welding robot 13 according to the present exemplary embodiment will be described with reference to Fig. 1. Fig. 1 is a side view illustrating an appearance of welding robot 13 including welding wire correction device 11 according to the present exemplary embodiment.

Welding robot 13 according to the present exemplary embodiment pulls out welding wire 15 from wire pack 29, which is an example of a wire supply source, and feeds welding wire 15 to welding wire correction device 11 through first feeding path 31. Welding robot 13 corrects welding wire 15 to a desired bending tendency by welding wire correction device 11, and then feeds the welding wire to torch 17 through second feeding path 33. Welding robot 13 feeds power to welding wire 15 with torch 17 and feeds the welding wire toward a welding portion (not illustrated) to weld the welding portion (not illustrated).

Welding robot 13 includes welding wire correction device 11, torch 17, manipulator 19, and wire feeding motor 27.

Welding robot 13 is a multi-axis robot, and each portion constituting manipulator 19 is configured to be drivable with a different axis as a reference. Manipulator 19 includes a base (not illustrated) installed in a production line (not illustrated) or the like, a turning portion (not illustrated) attached to an upper portion of the base (not illustrated), upper arm 21 attached to the turning portion (not illustrated), forearm 23 attached to upper arm 21, and wrist 25 attached to forearm 23. Note that Fig. 1 illustrates only upper arm 21, forearm 23, and wrist 25 as manipulator 19, and does not illustrate parts controlled based on other axes.

Welding robot 13 adjusts the position of torch 17 attached to wrist 25 by the operation of each of the base (not illustrated), the turning portion (not illustrated), upper arm 21, and forearm 23, and controls the posture of torch 17 by the operation of wrist 25, thereby implementing arc welding of the welding portion (not illustrated).

Welding wire correction device 11 is attached to exterior fixing base 35 fixed to a back portion of forearm 23 of welding robot 13 and is configured integrally with forearm 23. Welding wire correction device 11 corrects the bending tendency of welding wire 15 fed through first feeding path 31 to a desired bending tendency. Welding wire correction device 11 supplies welding wire 15 after the correction to torch 17 through second feeding path 33.

First feeding path 31 connects wire pack 29 and welding wire correction device 11, and is configured using, for example, a flexible conduit, a guide tube through which welding wire 15 can be inserted, or the like. First feeding path 31 functions as a path through which welding wire 15 pulled out from wire pack 29 by wire feeding motor 27 can be fed toward welding wire correction device 11.

Second feeding path 33 connects welding wire correction device 11 and torch 17, and is configured using, for example, a flexible conduit, a guide tube through which welding wire 15 can be inserted, or the like. Second feeding path 33 functions as a path through which welding wire 15 pulled out from welding wire correction device 11 by wire feeding motor 27 can be fed toward torch 17.

Torch 17 is disposed at wrist 25 of welding robot 13. Torch 17 feeds power by an incorporated power supply chip (not illustrated) to welding wire 15 fed from welding wire correction device 11 through second feeding path 33 by wire feeding motor 27, and feeds the welding wire toward the welding portion (not illustrated).

In the present exemplary embodiment, wire feeding motor 27 is driven while the rotation direction of the motor is switched between a normal phase direction and a reverse phase direction to pull out welding wire 15 from wire pack 29 and feed welding wire 15 toward torch 17. Torch 17 according to the present exemplary embodiment is a so-called servo pull torch that performs welding while wire feeding motor 27 takes welding wire 15 into and out of the torch at high speed.

An example in which the attachment position of welding wire correction device 11 according to the present exemplary embodiment is the back portion of forearm 23 will be described, but the attachment position is not limited thereto, and may be an upper portion of torch 17. In a case where welding wire correction device 11 is attached to the upper portion of torch 17, welding wire 15 whose bending tendency has been corrected is fed to torch 17 through a shorter feeding path. Therefore, welding robot 13 can prevent welding wire 15 having a desired bending tendency from having another bending tendency during the feeding through second feeding path 33 due to a change in the posture of each part of welding robot 13.

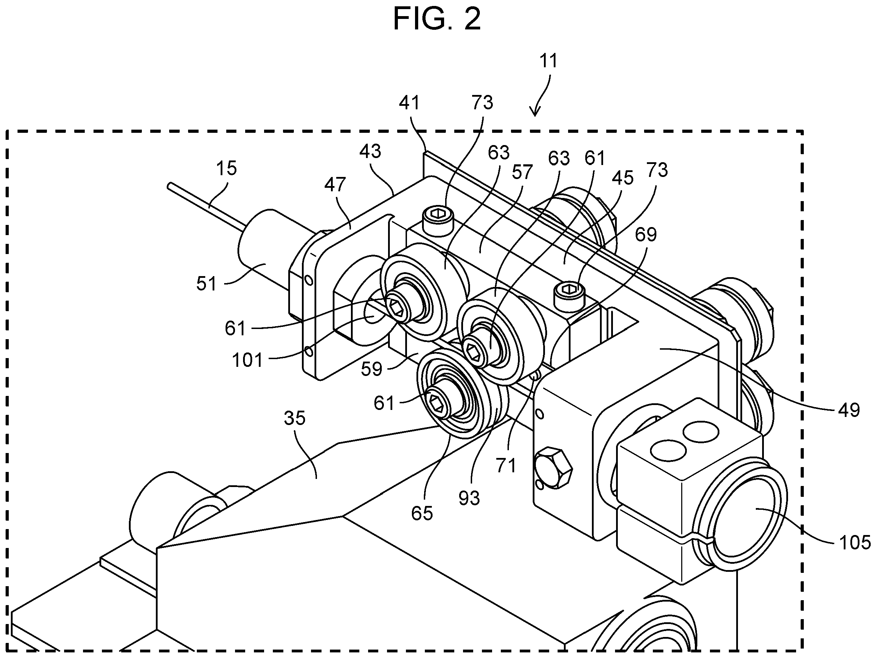

Next, welding wire correction device 11 will be described with reference to Fig. 2. Fig. 2 is an enlarged perspective view of a main part in the vicinity of welding wire correction device 11.

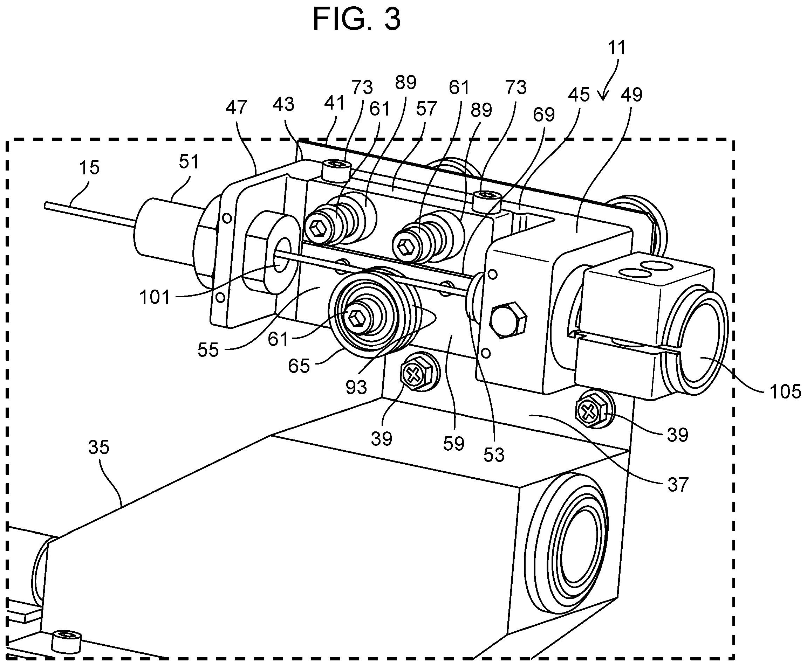

Welding wire correction device 11 is integrally attached to forearm 23 by being fixed to mounting plate 37 (see Fig. 3) of exterior fixing base 35 fixed to forearm 23.

Exterior fixing base 35 includes metal mounting plate 37 (see Fig. 3) having a plate surface standing in a direction along a vertical plane. A joint plate (not illustrated) is attached to mounting plate 37 by attachment screw 39 (see Fig. 3). Base stationary plate 41 is fixed to one side surface of the joint plate. Correction base 43 formed in a substantially U shape in plan view of welding wire correction device 11 is attached and fixed to one surface of base stationary plate 41.

Correction base 43 is integrally formed of metal having high stiffness. Correction base 43 includes base part 45 having a flat surface facing base stationary plate 41 and formed in a substantially rectangular shape, parallel guide fixing rear plate part 47 protruding in a direction orthogonal to base part 45 from one side surface at each of both ends in a longitudinal direction of base part 45, and guide fixing front plate part 49.

Guide fixing rear plate part 47 includes first guide 51 that guides welding wire 15 fed through first feeding path 31 to passage 55 to be described later.

Guide fixing front plate part 49 includes second guide 53 that guides welding wire 15 corrected to a desired bending tendency to second feeding path 33 through passage 55.

Welding wire correction device 11 includes a plurality of correction rollers (for example, upper correction roller 63 and lower correction roller 65) arranged in the vertical direction with passage 55 interposed between first guide 51 and second guide 53. Welding wire correction device 11 includes upper support part 57 and lower support part 59. Upper support part 57 supports at least one upper correction roller 63 disposed above passage 55 among the plurality of correction rollers. Lower support part 59 supports at least one lower correction roller 65 disposed below passage 55 among the plurality of correction rollers.

Upper correction roller 63 and lower correction roller 65 are arranged at a predetermined interval in the vertical direction along the passing direction of welding wire 15 with the passage 55 interposed therebetween, and thus correct the bending tendency of welding wire 15 passing through passage 55 to a desired bending tendency.

Upper support part 57 and lower support part 59 are made of a stiff metal material, and are formed as cuboids (block bodies) having the same outer shape. Specifically, each of upper support part 57 and lower support part 59 is formed as a plate-shaped block body in which a surface corresponding to base part 45 and a surface to which the correction roller is attached are along a vertical plane. Upper support part 57 and lower support part 59 are formed in a rectangular shape having a long side in a feeding direction of welding wire 15 in side view.

Each of upper support part 57 and lower support part 59 has at least one support shaft 61 on one side surface. Support shaft 61 is screwed and protrudes perpendicularly to one side surface of each of upper support part 57 and lower support part 59. Upper correction roller 63 and lower correction roller 65 are rotatably supported by corresponding support shafts 61.

Two upper correction rollers 63 disposed on upper support part 57 are disposed apart from each other in a direction along passage 55 of welding wire 15. One lower correction roller 65 disposed on lower support part 59 is disposed on the opposite side (lower side) of two upper correction rollers 63 with passage 55 interposed therebetween and at a substantially intermediate position between two upper correction rollers 63 in the direction along passage 55.

An example in which welding wire correction device 11 according to the present exemplary embodiment includes three correction rollers will be described. Specifically, in the present exemplary embodiment, two correction rollers are disposed on upper support part 57 and one correction roller is disposed on lower support part 59. The number and arrangement of the correction rollers are not limited thereto. Welding wire correction device 11 may include, for example, three upper correction rollers 63 and two lower correction rollers 65.

The number of upper correction rollers 63 may be smaller than the number of lower correction rollers 65. The number and arrangement of correction rollers may be correctable to obtain a desired bending tendency corresponding to a bending direction of torch neck 67 (see Fig. 1) of torch 17.

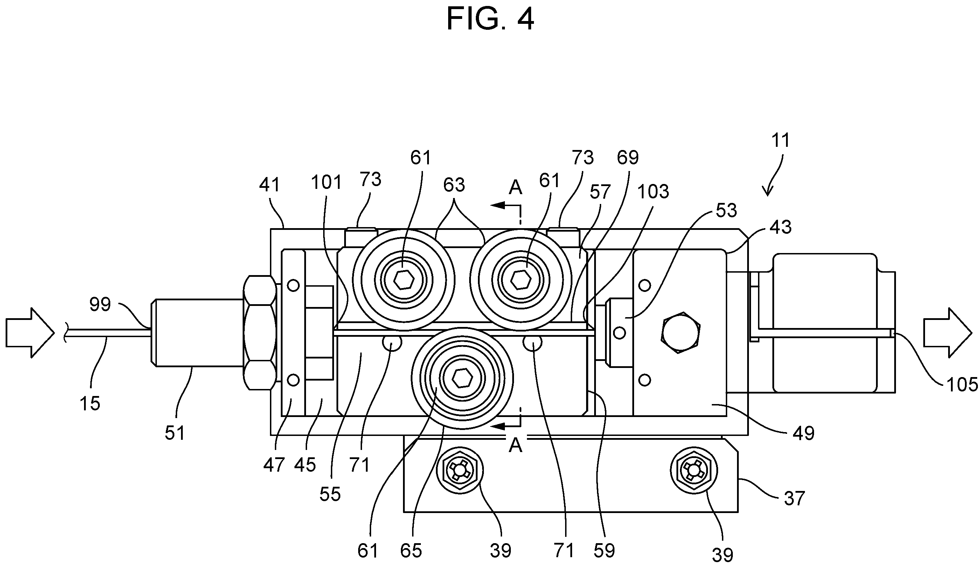

Next, the adjustment of the interval between upper correction roller 63 and lower correction roller 65 will be described with reference to Figs. 3 and 4. Fig. 3 is a perspective view of welding wire correction device 11. Fig. 4 is a side view of welding wire correction device 11. In Fig. 3, upper correction roller 63 is not illustrated for easy understanding of the description.

Welding wire correction device 11 is disposed such that the plurality of correction rollers are arranged at the predetermined interval so as to face each other with passage 55, through which welding wire 15 passes, interposed between the correction rollers. Welding wire 15 passes through passage 55 after passing through first wire inlet 99 and first wire outlet 101 of first guide 51 from first feeding path 31, and is fed to second feeding path 33 from passage 55 through second wire inlet 103 and second wire outlet 105 of second guide 53.

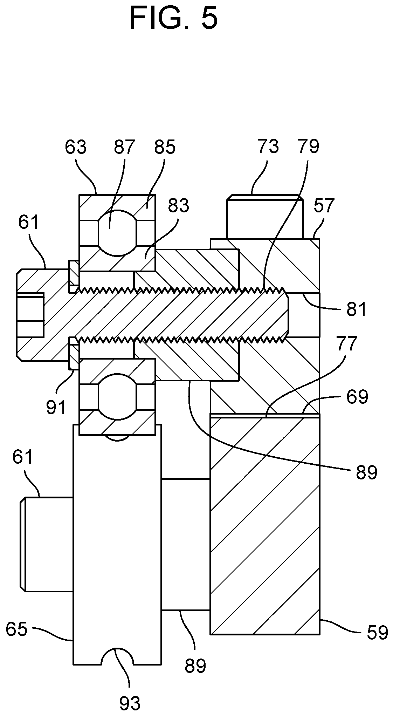

Welding wire correction device 11 is configured such that the interval between two upper correction rollers 63 and one lower correction roller 65 arranged with passage 55 interposed therebetween, that is, the interval in a direction orthogonal to the direction along passage 55 can be adjusted by using at least one plate member 69. Specifically, welding wire correction device 11 is configured such that the width of passage 55 in the vertical direction, that is, the interval between two upper correction rollers 63 and one lower correction roller 65 can be adjusted by using plate member 69 which can be placed (inserted) on placement surface 77 (see Figs. 5 to 7), which is an upper surface of lower support part 59, between upper support part 57 and lower support part 59.

An upper portion of welding wire 15 passing through passage 55 comes into contact with each of two upper correction rollers 63. A lower portion of welding wire 15 passing through passage 55 comes into contact with groove 93 of lower correction roller 65. In a case where groove 93 is not formed in lower correction roller 65, welding wire 15 comes into contact with an outer diameter circle of lower correction roller 65. Welding wire 15 is strained in proportion to applied stress, and residual strain remains when stress exceeding the proportional limit is applied. Welding wire correction device 11 adjusts the residual strain.

Specifically, welding wire correction device 11 pushes and bends welding wire 15 downward by each of upper correction rollers 63 between which lower correction roller 65 is located and which are located at the two positions in the feeding direction, and pushes and bends welding wire 15 upward by lower correction roller 65 between two upper correction rollers 63, thereby correcting the bending tendency of welding wire 15, which is to be fed to second feeding path 33, into a substantially inverted V shape. Therefore, welding wire correction device 11 can correct welding wire 15 such that the bending tendency (curvature) becomes stronger when the interval between upper correction roller 63 and lower correction roller 65 is set to be shorter by plate member 69, and can correct welding wire 15 such that the bending tendency of welding wire 15 becomes a linear shape having a smaller curvature when the interval between upper correction roller 63 and lower correction roller 65 is set to be longer by plate member 69.

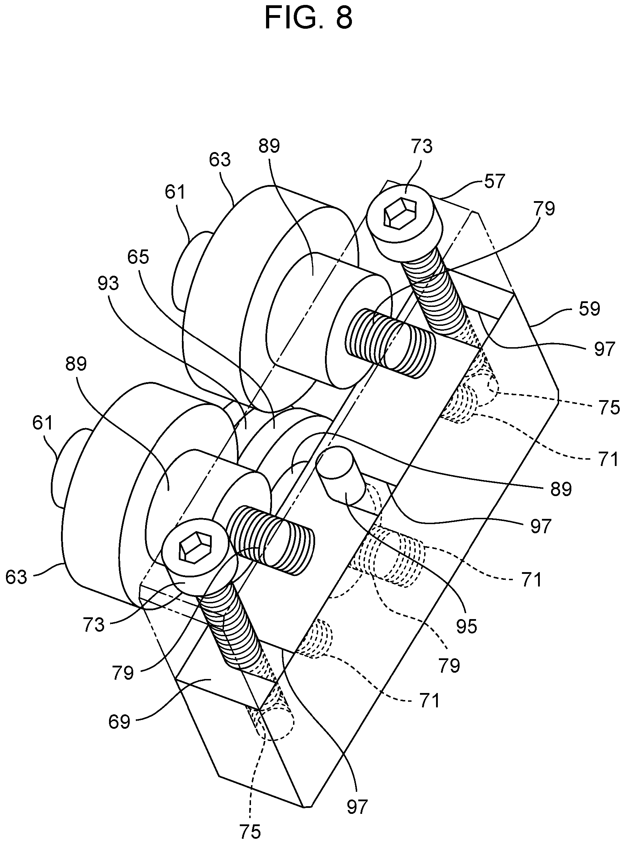

Only lower support part 59 out of upper support part 57 and lower support part 59 is fixed to base part 45 of correction base 43 by a plurality of (for example, three) support part fixing bolts 71 (see Figs. 4 and 8). On the other hand, upper support part 57 is fastened to lower support part 59 by a bolt 73 screwed in the vertical direction. Two bolts 73 penetrate through upper support part 57 in the vertical direction and are detachably fastened and fixed to lower support part 59 fixed to base part 45. That is, in lower support part 59, female screws 75 (see Fig. 8) into which two bolts 73 can be screwed are formed at two positions. Two bolts 73 penetrate from an upper end surface toward a lower end surface of upper support part 57. Two bolts 73 are disposed apart from each other in the feeding direction of welding wire 15. The number of bolts 73 is not limited thereto, and may be plural such as 3, 4, or the like.

Placement surface 77 (see Fig. 5) on which plate member 69 is placed is formed on an upper surface of lower support part 59. Plate member 69 has substantially the same outer shape as that of placement surface 77. Since a lower surface of upper support part 57 and the upper surface (placement surface 77) of lower support part 59 have substantially the same shape as that of plate member 69, plate member 69 placed on placement surface 77 and sandwiched between the lower surface of upper support part 57 and the upper surface (placement surface 77) of lower support part 59 does not protrude from side surfaces of upper support part 57 and lower support part 59.

In welding wire correction device 11, placement surface 77 is formed above the height of welding wire 15 passing through passage 55 and above the height of the maximum outer diameter of lower correction roller 65 disposed on lower support part 59. Therefore, even when welding wire 15 is inserted in passage 55, the fastening of bolt 73 can be released, and an operator can easily insert and remove plate member 69 onto and from placement surface 77 with a gap formed between the placement surface and the lower surface of upper support part 57.

In welding wire correction device 11, the height connecting first wire inlet 99 and first wire outlet 101 of first guide 51 and second wire inlet 103 and second wire outlet 105 of second guide 53, which are both ends of passage 55, is formed below the height of the maximum outer diameter of lower correction roller 65 disposed on lower support part 59. As a result, in welding wire correction device 11, the height of passage 55 in the vertical direction, that is, the height of welding wire 15 inserted in passage 55 is lower than the upper surface (placement surface 77) of lower support part 59. Therefore, even when welding wire 15 is inserted in passage 55, the fastening of bolt 73 can be released, and the operator can easily insert and remove plate member 69 onto and from placement surface 77 with the gap formed between the placement surface and the lower surface of upper support part 57.

Next, a support structure of upper correction roller 63 by upper support part 57 and a support structure of lower correction roller 65 by lower support part 59 will be described with reference to Fig. 5. Fig. 5 is a sectional view taken along line A-A of Fig. 4.

Male screw 79 is formed at a distal end of support shaft 61 that supports each correction roller. Male screw 79 is screwed into female screw 81 formed at a predetermined position of upper support part 57 or lower support part 59. Each of the correction rollers is a bearing whose center is supported by support shaft 61. The bearing is implemented by a normal rolling bearing having an inner ring (inner race 83), an outer ring (outer race 85), and a rolling element 87.

In the bearing, spacer 89 is sandwiched between upper support part 57 and inner race 83 or between lower support part 59 and inner race 83, and is disposed to be separated from one side surface of upper support part 57 and lower support part 59. The head of support shaft 61, which coaxially penetrates through inner race 83 and spacer 89, contacts one side surface of inner race 83 via washer 91, and the correction roller is non-rotatably fixed to upper support part 57 or lower support part 59.

Lower correction roller 65 disposed on lower support part 59 has groove 93 that is formed to prevent welding wire 15 from falling off from passage 55 and extends along an outer peripheral surface (outer peripheral surface of outer race 85). Groove 93 has, for example, a semicircular cross-sectional shape. The cross-sectional shape of groove 93 is not limited thereto, and may be a concave shape, an arc shape, a U shape, a V shape, or the like. Groove 93 has a function of suppressing a positional deviation of welding wire 15 or vibration of welding wire 15.

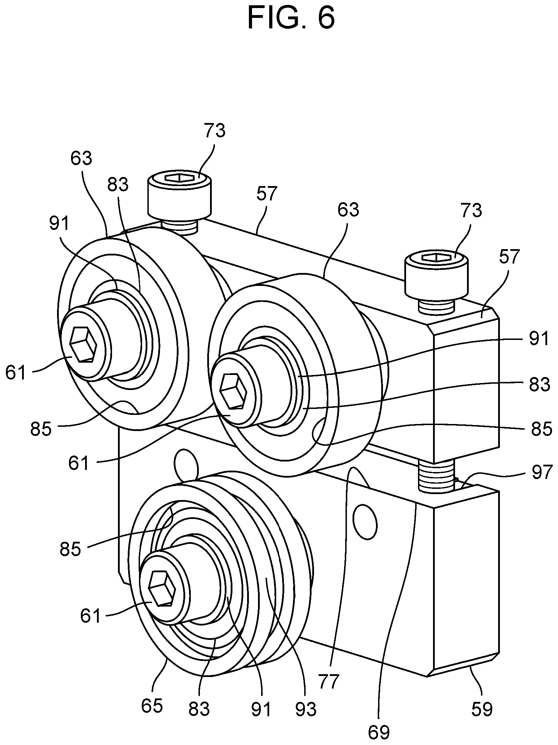

Next, the adjustment of the number of plate members 69 will be described with reference to Fig. 6. Fig. 6 is an exploded perspective view of the main part in a state where upper support part 57 and lower support part 59 are separated from each other.

In welding wire correction device 11, when bolt 73 fixing upper support part 57 is unfastened, upper support part 57 and bolt 73 can be separated or detached upward from the upper surface (placement surface 77) of lower support part 59. When upper support part 57 is separated from or removed from the upper surface (placement surface 77) of lower support part 59, placed plate member 69 is exposed on placement surface 77 of lower support part 59. The number of plate members 69 is adjusted by the operator inserting and removing a plate member onto and from placement surface 77 of lower support part 59 in a state where upper support part 57 is separated or removed from lower support part 59.

Plate member 69 is formed to have a thickness of, for example, 0.05 mm, 0.1 mm, 0.2 mm, 0.3 mm, 0.4 mm, 0.5 mm, or the like. As a result, the operator can easily adjust the interval between upper support part 57 and lower support part 59 to a desired interval in height increments corresponding to the thickness (for example, 0.05 mm, 0.1 mm, 0.2 mm, 0.3 mm, 0.4 mm, 0.5 mm, or the like) of plate member 69 by changing the number or thickness of plate members 69 placed (inserted) on placement surface 77 or changing a combination of the number of plate members 69 placed (inserted) on placement surface 77 and the thickness of each plate member 69.

As described above, welding wire correction device 11 can easily adjust the interval between upper support part 57 and lower support part 59, that is, the interval between upper correction roller 63 and lower correction roller 65. Thus, welding wire correction device 11 can adjust the height of passage 55 in the vertical direction based on the thickness and the number of plate members 69 placed on placement surface 77 of lower support part 59, so that the bending tendency of welding wire 15 passing through passage 55 can be corrected to a bending tendency desired by the operator by each of upper correction roller 63 and lower correction roller 65.

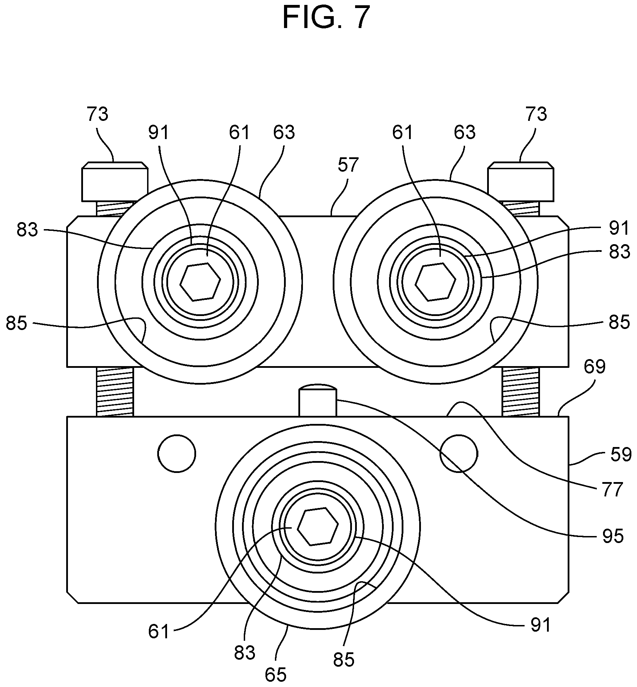

Next, plate member 69 will be described with reference to each of Figs. 7 and 8. Fig. 7 is an enlarged side view of the main part of welding wire correction device 11 when one side surface illustrated in Fig. 6 is viewed from the front. Fig. 8 is a transparent perspective view of lower support part 59.

Welding wire correction device 11 includes positioning pin 95 which is located on placement surface 77 of lower support part 59 and fitted to upper support part 57 and to which at least one plate member 69 placed (inserted) on placement surface 77 is locked. Note that positioning pin 95 illustrated in Fig. 8 has a circular cross section orthogonal to the axial direction as an example, but is not limited thereto.

Upper support part 57 has a positioning hole (not illustrated) that is in a lower surface facing lower support part 59 and into which positioning pin 95 is inserted. When upper support part 57 and lower support part 59 are fastened by two bolts 73, positioning pin 95 is inserted into the positioning hole in upper support part 57 to prevent a positional deviation between upper support part 57 and lower support part 59 in the horizontal direction.

In plate member 69, a notch 97 having a substantially U-shape in an insertion direction is formed at a position corresponding to each of positioning pin 95 and two bolts 73 arranged in a long side direction of placement surface 77. When plate member 69 is placed (inserted) on placement surface 77, notches 97 are locked and positioned by positioning pin 95 and two bolts 73, respectively, thereby preventing a positional deviation in the horizontal direction.

Thus, welding wire correction device 11 can more effectively suppress a positional deviation in three directions including the long side direction of placement surface 77 and an insertion direction of plate member 69. As a result, welding wire correction device 11 can suppress a positional deviation between plate members 69 when plate members 69 are stacked and placed, and a positional deviation of plate member 69 when upper support part 57 and lower support part 59 are fastened.

Since welding wire correction device 11 is configured to suppress only a positional deviation in the three directions, plate member 69 can be inserted into and removed from the gap between upper support part 57 and lower support part 59 without completely pulling out positioning pin 95 of lower support part 59 from the positioning hole (not illustrated) of upper support part 57. As a result, the operator can more efficiently adjust the interval between upper support part 57 and lower support part 59.

As described above, welding wire correction device 11 according to the present exemplary embodiment can adjust the interval between upper support part 57 and lower support part 59 with higher accuracy (for example, 0.05 mm to 0.5 mm) by placing plate member 69 on placement surface 77. In addition, welding wire correction device 11 can correct welding wires 15 having different materials and diameters to a desired bending tendency regardless of individual differences in notches of adjustment screws of welding wire correction device 11 or the work skill of the operator.

### (Supplementary note)

The following techniques are disclosed based on the above description of the present exemplary embodiment.

### (Technique 1)

Welding wire correction device 11 that straightens bending of welding wire 15 by passing welding wire 15 between a plurality of correction rollers (upper correction roller 63 and lower correction roller 65), wherein
the plurality of correction rollers (upper correction roller 63 and lower correction roller 65) are arranged at a predetermined interval in a passing direction of welding wire 15 and face each other with passage 55 interposed between the correction rollers, passage 55 being a passage through which welding wire 15 passes, and
the predetermined interval is adjustable by using at least one plate member 69.

With this configuration, welding wire correction device 11 can correct the bending tendency of welding wire 15 to a desired bending tendency corresponding to the interval between upper correction roller 63 and lower correction roller 65 adjusted by using plate member 69. Therefore, welding wire correction device 11 can more effectively suppress a variation in the interval between upper correction roller 63 and lower correction roller 65, so that the reproducibility of the bending tendency of welding wire 15 can be improved.

### (Technique 2)

Welding wire correction device 11 according to (technique 1), wherein
a correction roller (upper correction roller 63) located above passage 55 among the plurality of correction rollers (upper correction roller 63 and lower correction roller 65) is disposed on upper support part 57, and
a correction roller (lower correction roller 65) located below passage 55 among the plurality of correction rollers (upper correction roller 63 and lower correction roller 65) is disposed on lower support part 59, and
plate member 69 is disposed between upper support part 57 and lower support part 59.

With this configuration, welding wire correction device 11 can adjust the interval between upper correction roller 63 and lower correction roller 65 based on the number of plate members 69 disposed between upper correction roller 63 and lower correction roller 65 and the thickness of each plate member 69.

### (Technique 3)

Welding wire correction device 11 according to (technique 1), wherein
upper support part 57 and lower support part 59 are fastened by bolt 73.

With this configuration, welding wire correction device 11 can expose placement surface 77 and insert and remove plate member 69 by releasing the fastening of bolt 73. Therefore, the operator can more easily adjust the interval between upper correction roller 63 and lower correction roller 65.

### (Technique 4)

Welding wire correction device 11 according to (technique 3), wherein
plate member 69 includes notch 97 that is locked to bolt 73.

With this configuration, in welding wire correction device 11, notch 97 of plate member 69 inserted onto placement surface 77 is locked to bolt 73, and plate member 69 can be more easily positioned. As a result, even when placement surface 77 is inclined due to the posture of welding robot 13 or even when a plurality of plate members 69 are stacked and placed, welding wire correction device 11 can more easily prevent a positional deviation between plate members 69, and can suppress protrusion of plate member 69 from the side surface of upper support part 57 and lower support part 59 by positioning after upper support part 57 and lower support part 59 are fastened by bolt 73.

### (Technique 5)

Welding wire correction device 11 according to (technique 2), wherein
one of upper support part 57 and lower support part 59 includes positioning pin 95 to be fitted to the other of upper support part 57 and lower support part 59, and
plate member 69 includes notch 97 that is locked to positioning pin 95.

With this configuration, in welding wire correction device 11, even when placement surface 77 is inclined due to the posture of welding robot 13 or even when a plurality of plate members 69 are stacked and placed, notch 97 of plate member 69 inserted onto placement surface 77 is locked to positioning pin 95, and plate member 69 can be more easily positioned.

### (Technique 6)

Welding wire correction device 11 according to any one of (technique 2) to (technique 5), wherein
placement surface 77 on which plate member 69 is placed is formed on an upper surface of lower support part 59.

With this configuration, in welding wire correction device 11, a facing surface (upper surface) of lower support part 59 facing upper support part 57 can function as placement surface 77 on which plate member 69 is placed. Thus, the operator can more easily adjust the interval between upper correction roller 63 and lower correction roller 65 only by placing (inserting) plate member 69 on placement surface 77 which is the upper surface of lower support part 59.

### (Technique 7)

Welding wire correction device 11 according to (technique 6), wherein
placement surface 77 is formed above welding wire 15 passing through passage 55 and above a maximum outer diameter of the correction roller (lower correction roller 65) disposed on lower support part 59.

With this configuration, in welding wire correction device 11, by loosening bolt 73 to provide a gap between upper support part 57 and lower support part 59, the operator can place (insert) plate member 69 on placement surface 77 or remove plate member 69 placed on placement surface 77 in a state where welding wire 15 is inserted in passage 55.

The present exemplary embodiment has been described above with reference to the accompanying drawings, but the present disclosure is not limited to the above examples. It is apparent that those skilled in the art can conceive various modification examples, correction examples, substitution examples, additional examples, removal examples, and equivalent examples within the scope described in the attached claims, and those examples are understood to be within the technical scope of the present disclosure. In addition, the components in the above-described exemplary embodiment may be optionally combined without departing from the spirit of the present invention.

### INDUSTRIAL APPLICABILITY

The present disclosure is useful as a presentation of a welding wire correction device capable of more easily adjusting an interval between correction rollers.

### REFERENCE MARKS IN THE DRAWINGS

11: welding wire correction device
15: welding wire
55: passage
57: upper support part
59: lower support part
63: upper correction roller
65: lower correction roller
69: plate member
73: bolt
77: placement surface
95: positioning pin

## Claims

1. A welding wire correction device that straightens bending of a welding wire by passing the welding wire between a plurality of correction rollers, wherein
the plurality of correction rollers are arranged at a predetermined interval in a passing direction of the welding wire and face each other with a passage interposed between the plurality of correction rollers, the passage being a passage through which the welding wire passes, and
the predetermined interval is adjustable by using at least one plate member.

2. The welding wire correction device according to Claim 1, wherein
a correction roller located above the passage among the plurality of correction rollers is disposed on an upper support part, and
a correction roller located below the passage among the plurality of correction rollers is disposed on a lower support part, and
the at least one plate member is disposed between the upper support part and the lower support part.

3. The welding wire correction device according to Claim 2, wherein
an interval between the correction roller disposed on the upper support part and above the passage and the correction roller disposed on the lower support part and below the passage is adjusted based on a number of the at least one plate member disposed between the upper support part and the lower support part and a thickness of each of the plate members.

4. The welding wire correction device according to Claim 2, wherein
the upper support part and the lower support part are fastened by a bolt.

5. The welding wire correction device according to Claim 4, wherein the at least one plate member includes a notch that is locked to the bolt.

6. The welding wire correction device according to Claim 2, wherein
one of the upper support part and the lower support part includes a positioning pin to be fitted to the other of the upper support part and the lower support part, and
the at least one plate member includes a notch that is locked to the positioning pin.

7. The welding wire correction device according to any one of Claims 2 to 6, wherein
a placement surface on which the at least one plate member is placed is formed on an upper surface of the lower support part.

8. The welding wire correction device according to Claim 7, wherein
the placement surface is formed above the welding wire passing through the passage and above a maximum outer diameter of the correction roller disposed on the lower support part.
